# EUROPÄISCHE PATENTSCHRIFT

(11) **EP 1 265 954 B1**
(45) Veröffentlichungstag und Bekanntmachung des Hinweises auf die Patenterteilung: **28.05.2008**
(21) Anmeldenummer: 01927680.7
(22) Anmeldetag: 21.02.2001
(51) Int. Cl.: C08K 5/523, C08L 69/00, C08L 25/12, C08L 51/00

(54) **FLAMMWIDRIGE POLYCARBONAT-FORMMASSEN FÜR EXTRUSIONSANWENDUNGEN**
FLAME-RESISTANT POLYCARBONATE MOULDING COMPOUNDS FOR EXTRUSION APPLICATIONS
MATIERES DE MOULAGE IGNIFUGES A BASE DE POLYCARBONATE POUR APPLICATIONS D'EXTRUSION

(30) Priorität: 06.03.2000 DE 10010943; 24.03.2000 DE 10014608
(43) Veröffentlichungstag der Anmeldung: 18.12.2002
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); KELLER, Bernd, 47608 Geldern (DE); WITTMANN, Dieter, 51375 Leverkusen (DE)
(86) Internationale Anmeldenummer: PCT/EP2001/001924
(87) Internationale Veröffentlichungsnummer: WO 2001/066634

(56) Entgegenhaltungen:
- EP-A- 0 869 150
- WO-A-99/07778
- DE-A- 19 742 868
- US-A- 5 621 029
- US-A- 5 750 602

## Beschreibung

Die vorliegende Erfindung betrifft chlor- und bromfreie, schlagzähmodifizierte Polycarbonat-Zusammensetzungen, die eine hohe Schmelzeviskosität und Schmelzestabilität besitzen, daher für eine Verarbeitung im Extrusionsverfahren geeignet sind und sich durch exzellente Flammwidrigkeit kombiniert mit gutem ESC-Verhalten und mechanischen Eigenschaften sowie eine hohe Wärmeformbeständigkeit auszeichnen.

Chlor- und bromfrei flammwidrig ausgerüstete, schlagzähmodifizierte Polycarbonatformmassen sind bekannt.

EP-A 0 345 522 (US-A 5 061 745) beschreibt z.B. Polymermischungen aus aromatischem Polycarbonat, ABS-Pfropfpolymerisat und/oder styrolhaltigem Copolymer, die mit Monophosphorsäureestern flammwidrig ausgerüstet sind.

In US-A 5 204 394 und 5 672 645 werden PC/ABS-Formmassen beschrieben, die durch Oligophosphorsäureester bzw. Mischungen aus Oligo- und Monophosphorsäureester flammwidrig ausgerüstet sind.

Die Mono- als auch Oligophosphorsäureester enthaltende PC/ABS-Blends gemäß oben genanntem Stand der Technik, zeichnen sich durch eine gegenüber den vergleichbaren nicht-flammwidrig ausgerüsteten Blends durch stark reduzierte Wärmeformbeständigkeit und vor allen Dingen durch eine stark reduzierte Schmelzeviskosität aus. Letzteres ist für die Verarbeitung im Spritzgussverfahren, welche derzeit vorwiegend für solche Formmassen zum Einsatz kommt, von Vorteil, da eine Verarbeitung bei niedrigeren Temperaturen ermöglicht wird und dadurch kürzere Zykluszeiten realisiert werden können. Für eine Verarbeitung der Formmassen im Extrusionsverfahren erweisen sich die niedrigen Schmelzeviskositäten als problematisch und die entsprechend resultierenden Schmelzestabilitäten als unzureichend, um unter gängigen Verarbeitungsbedingungen einen vorzeitigen Profilabriss zu verhindern. Dieses gilt insbesondere für solche Formmassen, für die eine exzellente Flammwidrigkeit auch bei kleinen Wandstärken gefordert wird, was den Einsatz großer Mengen des weichmachenden Flammschutzmittels erfordert. Die Verbesserung der Flammwidrigkeit zieht bei den beschriebenen Systemen in der Regel eine Reduktion der Schmelzestabilität nach sich. Insbesondere erweist es sich als schwierig, ein gute Flammwidrigkeit und hohe Schmelzestabilität kombiniert mit einem hohen Zähigkeitsniveau zu realisieren, da letzteres den Einsatz signifikanter Mengen an Schlagzähmodifikatoren, wie z.B. SAN-gepfropftem Polybutadienkautschuk erfordert, die aufgrund ihrer guten Brennbarkeit einer flammwidrigen Ausrüstung des Blends erschwerend entgegenstehen.

In JP-A 111 997 68 werden PC/ABS-Blends beschrieben, die mit monomeren und oligomeren Phosphorsäureestem flammwidrig ausgerüstet sind, wobei die Flammwidrigkeit durch Zusatz eines anorganischen Füllstoffs, wie z.B. Talk deutlich verbessert wird. Die hierdurch realisierbare Reduktion des Phosphatgehalts bei unveränderter Flammwidrigkeit ist jedoch unzureichend, um die für Extrusionsanwendungen nötigen Schmelzeviskositäten zu erreichen. Des Weiteren wirkt sich der anorganische Füllstoff im Allgemeinen nachteilig auf die mechanischen Eigenschaften, insbesondere auf die Zähigkeit des Polymerblends aus.

US-A 5 849 827 und WO 99/07782 beschreiben PC/ABS-Formmassen, die mit Resorcinol-basierendem bzw. Bisphenol-A-basierendem Oligophosphat flammwidrig ausgerüstet sind, wobei die Nachbrennzeiten durch Zusatz nanoskaliger anorganischer Materialien in kleinen Konzentrationen deutlich reduziert werden. Auch die hier beschriebenen Formmassen besitzen aber eine für Extrusionsanwendungen unzureichende Schmelzestabilität.

WO 99/57198 beschreibt PC/ABS-Formmassen, die mit einem Resorcinolabgeleiteten Oligophosphat flammwidrig ausgerüstet sind und sich durch einen sehr niedrigen Teflongehalt von nur 0,1 Gew.-% - entsprechend einem Fluorgehalt von 0,076 % - auszeichnen. In den Formmassen kommen lineare und verzweigte Polycarbonate mit hohem Molekulargewicht (31,000 bzw. 32,000 g/mol) zum Einsatz. Die rheologischen Eigenschaften der beschriebenen Formmassen (MVR) lassen eine Verarbeitung im Extrusionsverfahren zu. Allerdings zeichnen sich die Formmassen durch eine Schwäche im ESC-Verhalten und in der Wärmeformbeständigkeit aus, insbesondere dann wenn genügend Flammschutzmittel eingesetzt wird, um eine ausreichende Flammwidrigkeit auch bei dünnen Wandstärken zu erzielen.

Aufgabe der vorliegenden Erfindung war daher die Bereitstellung einer chlor- und bromfreien Formmasse, welche sich durch eine ausgezeichnete Flammwidrigkeit auch bei dünnen Wandstärken, gute mechanische Eigenschaften und ein verbessertes ESC-Verhalten auszeichnet, und welche aufgrund einer hohen Schmelzestabilität im Extrusionverfahren verarbeitet werden kann.

Es wurde nun gefunden, dass solche schlagzähmodifizierten Polycarbonat-Zusammensetzungen mit hochmolekularen linearen oder verzweigten Polycarbonaten, die mit halogenfreien Phosphorverbindungen flammwidrig ausgerüstet sind und bevorzugt auch ein fluoriertes Polyolefin in einer Konzentration von ≥0,15 Gew.-% bezogen auf die Gesamtzusammensetzung enthalten, das gewünschte Eigenschaftsprofil erfüllen und zudem eine ausgezeichnete Wärmeformbeständigkeit aufweisen.

Gegenstand der vorliegenden Erfindung sind somit solche Polycarbonat-Formmassen, die den UL94 V-Brandtest mit der Bewertung V-0 bei Wandstärken ≤1,5 mm bestehen, eine Schmelzeviskosität gemessen bei 260°C und einer Scherrate von 100 s⁻¹ von ≥600, bevorzugt ≥800, besonders bevorzugt ≥1000, Pa s aufweisen und
A) 75 bis 90 Gew.-Teile mindestens eines linearen oder verzweigten aromatischen Polycarbonats mit einer relativen Lösungsviskosität von ≥ 1,30 (gemessen bei 25°C in Methylenchlorid und in einer Konzentration von 0,5 g/100ml),
B) 2 bis 10 Gew.-Teile mindestens eines Pfropfpolymerisats hergestellt durch Emulsionspolymerisation,
C) 3 bis 12 Gew.-Teile mindestens eines halogen freien phosphorhaltigen Flammschutzmittels,
D) 0,2 bis 0,5 Gew.-Teile eines fluorierten Polyolefins,
   und
E) 0 bis 1,5 Gew.-Teile eines feinteiligen partikel-, schuppen- oder faserförmigen anorganischen Materials,
wobei die Summe der Gewichtsteile aller Komponenten (A bis E sowie gegebenenfalls weiterer Bestandteile) 100 ergibt, enthalten.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-A 2 232 877, DE-A 2 703 376, DE-AOS 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 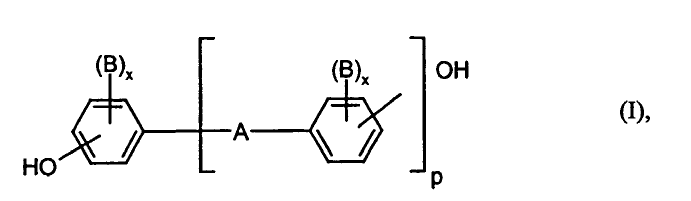 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 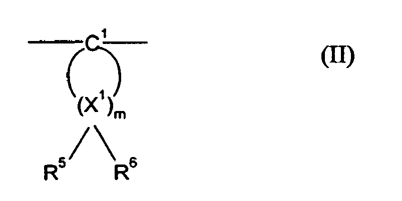 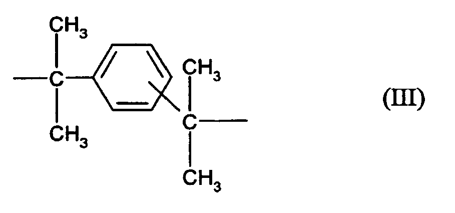
- B: jeweils C₁-C₁₂-Alkyl, vorzugsweise Methyl,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol und p-tert.-Butylphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxanhaltiger Copolycarbonate wird z.B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) aromatischer Polycarbonate und Polyestercarbonate liegt im Bereich von 1,18 bis 1,4 (gemessen an Lösungen von 0,5 g Polycarbonat oder Polyestercarbonat in 100 ml Methylenchlorid-Lösung bei 25°C). In den erfindungsgemäßen Formmassen kommen nur solche Polycarbonate und Polyestercarbonate mit einer relativen Lösungsviskosität von ≥ 1,30 zum Einsatz.

Die thermoplastischen, aromatischen Polycarbonate und Polyestercarbonate können allein oder im beliebigen Gemischen miteinander eingesetzt werden.

### Komponente B

Die Komponente B umfasst ein oder mehrere Pfropfpolymerisate von
B.1 5 bis 95, vorzugsweise 30 bis 90 Gew.-%, wenigstens eines Vinylmonomeren auf
B.2 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

### Monomere B.1 sind vorzugsweise ein Gemisch aus

B.1.1 50 bis 99 Gew.-Teilen Vinylaromaten und/oder kernsubstituierten Vinylaromaten (wie beispielsweise und bevorzugt Styrol, α-Methylstyrol, p-Methylstyrol) und/oder Methacrylsäure-(C₁-C₈)-Alkylester (wie z.B. und vorzugsweise Methylmethacrylat, Ethylmethacrylat) und
B.1.21 1 bis 50 Gew.-Teilen Vinylcyanide (ungesättigte Nitrile wie beispielsweise und bevorzugt Acrylnitril und Methacrylnitril) und/oder (Meth)Acrylsäure-(C₁-C₈)-Alkylester (wie z.B. und bevorzugt Methylmethacrylat, n-Butylacrylat, t-Butylacrylat) und/oder Derivate (wie beispielsweise und bevorzugt Anhydride und Imide) ungesättigter Carbonsäuren (beispielsweise und bevorzugt Maleinsäureanhydrid und/oder N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, sowie Acrylat-, Polyurethan-, Silikon-, und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind ABS-Polymerisate (Emulsions-, Masse- und Suspensions-ABS), wie sie z.B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch Emulsions polymerisation hergestellt.

Besonders bevorzugt als Komponente B ist Emulsions-ABS.

Geeignete Pfropfkautschuke sind insbesondere auch solche ABS-Polymerisate, die durch Redox-Initiierung mit einem Initiatorsystem aus organischem Hydroperoxid und Ascorbinsäure gemäß US-A 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Als Flammschutzmittel (C) enthalten die erfindungsgemäßen Formmassen eine Phosphorverbindungen der allgemeinen Formel (IV) 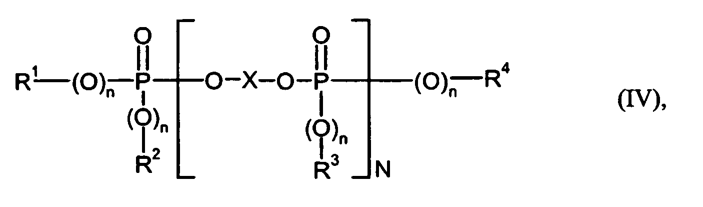 worin
- R¹, R², R³ und R⁴,: unabhängig voneinander jeweils C₁- bis C₈-Alkyl, jeweils gegebenenfalls durch Alkyl, vorzugsweise C₁-C₄-Alkyl substituiertes C₅- bis C₆-Cycloalkyl, C₆- bis C₂₀-Aryl oder C₇- bis C₁₂-Aralkyl,
- n: unabhängig voneinander, 0 oder 1
- N: eine Zahl zwischen 0,1 und 30,
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁-C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) ist vorzugsweise gleich 1.
- N: kann Werte von 0,1 bis 30 annehmen, bevorzugt sind Werte von 0,5 bis 10, insbesondere von 0,7 bis 5. Als erfindungsgemäße Komponente C können auch Mischungen verschiedener Phosphate gemäß Formel (IV) eingesetzt werden. In diesem Fall kann N die oben genannten Werte als Durchschnittswerte annehmen. In den Gemischen können auch Monophosphorverbindungen (N=0) enthalten sein.

Monophosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Methylphosphonsäuredimethylester, Methylphosphensäurediphenylester, Phenylphosphonsäurediethylester, Triphenylphosphinoxid oder Trikresylphosphinoxid. Besonders bevorzugte Monophosphorverbindung ist Triphenylphosphat.

Die gemittelten N-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden.
- X: steht besonders bevorzugt für

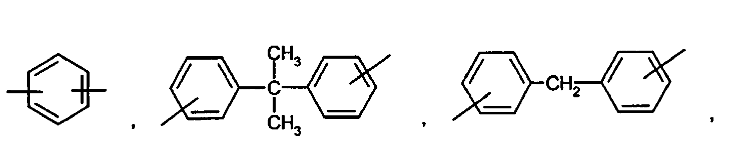

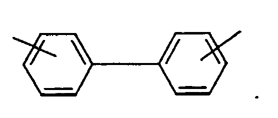

Als besonders vorteilhaft hat sich der Einsatz von Phosphorverbindungen der allgemeinen Formel (V) 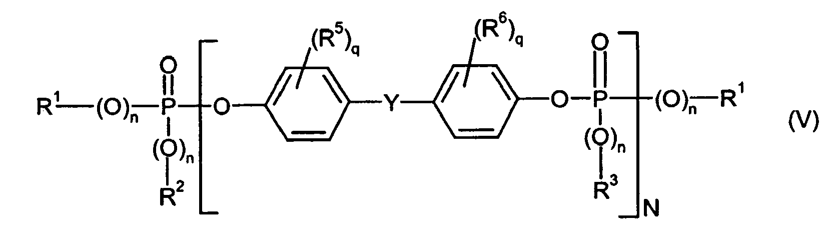 erwiesen, worin
- R¹, R², R³ und R⁴: jeweils unabhängig voneinander C₁-C₈-Alkyl und/oder gegebenenfalls durch Alkyl substituiertes C₅-C₆-Cycloalkyl, C₆-C₁₀-Aryl oder C₇-C₁₂-Aralkyl,
- n: unabhängig voneinander 0 oder 1, vorzugsweise 1,
- q: unabhängig voneinander 0, 1, 2, 3 oder 4, vorzugsweise 0, 1 oder 2,
- N: eine Zahl zwischen 0,1 und 30, bevorzugt zwischen 0,5 und 10, insbesondere zwischen 0,7 und 5,
- R⁵ und R⁶: unabhängig voneinander C₁-C₄-Alkyl, vorzugsweise Methyl und
- Y: C₁-C₇-Alkyliden, C₁-C₇-Alkylen, C₅-C₁₂-Cycloalkylen, C₅-C₁₂-Cycloalkyliden, -O-, -S-, -SO-, SO₂ oder -CO- bedeuten.

Insbesondere bevorzugt sind solche Verbindungen der allgemeinen Formel (V), die sich vom Bisphenol-A oder desses methylsubstituierten Derivaten ableiten.

Die Phosphorverbindungen gemäß Komponente C, Formel (IV). sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Als Flammschutzkomponente C können auch andere halogenfreie Phosphorverbindungen eingesetzt werden, und zwar sowohl allein als auch in beliebiger Mischung mit Verbindungen der allgemeinen Formel (IV). Als solche halogenfreie Phosphorverbindungen kommen insbesondere in Frage Verbindungen aus der Gruppe der Phosphazene und der Phosphonatamine.

Phosphonatamine sind Verbindungen der Formel (VI)

A_{3-y}-NB¹_{y} (VI)

in welcher
- A: für einen Rest der Formel (VIa) 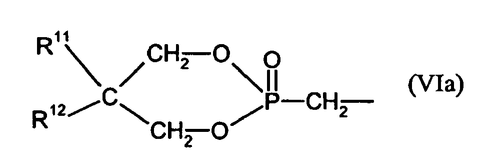 oder (VIb) 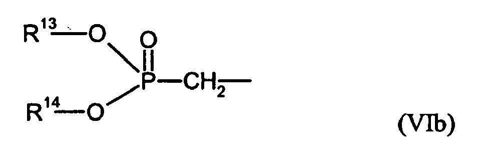 steht,
- R¹¹ und R¹²: unabhängig voneinander für C₁-C₁₀-Alkyl oder für unsubstituiertes oder substituiertes C₆-C₁₀-Aryl, stehen,
- R¹³ und R¹⁴: unabhängig voneinander für C₁-C₁₀-Alkyl oder unsubstituiertes oder substituiertes C₆-C₁₀-Aryl stehen,
- y: die Zahlenwerte 0, 1 oder 2 bedeuten und
- B¹: unabhängig für Wasserstoff, C₂-C₈-Alkyl, unsubstituiertes oder substituiertes C₆-C₁₀-Aryl steht.
- B¹: steht vorzugsweise unabhängig für Wasserstoff, für Ethyl, n- oder iso-Propyl, unsubstituiertes oder durch C₁-C₄-Alkyl substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl.

Beispielhaft und vorzugsweise sei genannt das 5,5,5',5',5",5"-Hexamethyltris(1,3,2-dioxaphosphorinan-methan)amino-2,2',2"-trioxid der Formel (VIa-1) 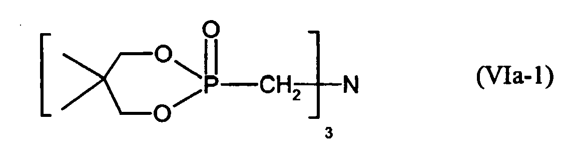 (Versuchsprodukt XPM 1000 der Fa. Solutia Inc., St. Louis, USA).

Die Herstellung der Phosphonatamine ist beispielsweise in der US-Patentschrift 5 844 028 beschrieben.

Phosphazene sind Verbindungen der Formeln (VIIa) und (VIIb) 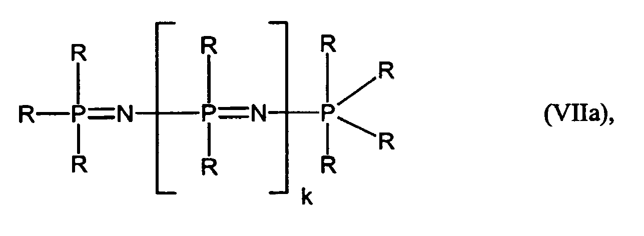 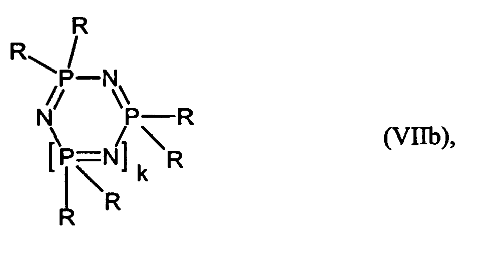 worin
- R: jeweils gleich oder verschieden ist und für C₁- bis C₈-Alkyl, oder C₁- bis C₈-Alkoxy, gegebenenfalls durch Alkyl, vorzugsweise C₁-C₄-Alkyl substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

### Beispielhaft seien genannt:

Propoxyphosphazen, Phenoxyphosphazen und Methylphenoxyphosphazen.

Bevorzugt ist Phenoxyphosphazen.

Phosphazene und deren Herstellung sind beispielsweise in EP-A 728 811, DE-A 1 961668 und WO 97/40092 beschrieben.

### Komponente D

Als Komponente D können die erfindungsgemäßen Zusammensetzungen fluorierte Polyolefine enthalten. Der Einsatz von fluorierten Polyolefinen, insbesondere in Mengen von 0,15 bis 0,5 Gew.-% ist vorteilhaft, da bei Gehalten von < 0,15 Gew.-% eine größere Flammschutzmittelmenge erforderlich ist, um eine V-0-Bewertung im UL94 V-Test zu erzielen. Die erhöhte Flammschutzmittelmenge wirkt sich jedoch nachteilig auf die Schmelzestabilität, Wärmeformbeständigkeit und Kerbschlagzähigkeit aus.

Fluorierte Polyolefine sind allgemein bekannt (vgl. z.B. EP-A 640655). Handelsübliches Produkt ist beispielsweise Teflon^{®} 30 N von der Firma DuPont.

Die fluorierten Polyolefine können auch in Form einer koagulierten Mischung von Emulsionen der fluorierten Polyolefine mit Emulsionen der Pfropfpolymerisate (B) oder mit einer Emulsion eines Copolymerisats vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat (B) oder einem Copolymerisat auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 - 95 Gew.-%, vorzugsweise 7 bis 60 Gew.-%.

### Komponente E

Desweiteren können der Polycarbonatzusammensetzung anorganische Materialien zugesetzt werden, insbesondere solche die die Schmelzestabilität aufgrund eines thixotropen Effektes erhöhen und/oder die Flammwidrigkeit der Formmasse verbessern. Die anorganischen Materialien kommen in möglichst kleinen aber wirksamen Mengen zum Einsatz, die sich auf die mechanischen Eigenschaften des Materials positiv oder zumindest nicht negativ auswirken. In Frage kommen prinzipiell alle anorganischen Materialien, vorzugsweise im feinvermahlenen Zustand. Diese können z.B. partikel-, schuppenförmigen oder faserförmigen Charakter haben.

Beispielhaft seien an dieser Stelle genannt Kreide, Quarzpulver, Titandioxid, Silikate/Aluminosilikate wie z.B. Talk, Wollastonit, Glimmer/Tonschichtmineralien, Montmorillonit, insbesondere auch in einer durch Ionenaustausch modifizierten, organophilen Form, Kaolin, Zeolithe, Vermiculit sowie Aluminiumoxid, Silica, Magnesiumhydroxid, Aluminiumhydroxid und Glasfasern/Glasschuppen. Es können auch Mischungen verschiedener anorganischer Materialien zum Einsatz kommen.

Die anorganischen Materialien können oberflächenbehandelt, z.B. silanisiert sein, um eine bessere Polymerverträglichkeit zu gewährleisten.

Die anorganischen Materialien kommen in Konzentrationen von 0 bis 1,5 Gew.-% bezogen auf die Gesamtzusammensetzung zum Einsatz.

Bevorzugt kommen anorganische Materialien mit schuppenförmigen Charakter zum Einsatz, wie z.B. Talk, Glimmer/Tonschichtmineralien, Montmorillonit, insbesondere auch in einer durch Ionenaustausch modifizierten, organophilen Form, Kaolin, und Vermiculit.

Besonders bevorzugt ist Talk.

Unter Talk wird ein natürlich vorkommender oder synthetisch hergestellter Talk verstanden.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind. Auch diese verunreinigten natürlichen Talkpulver können in den erfindungsgemäßen Formmassen zum Einsatz kommen, bevorzugt sind jedoch Talktypen hoher Reinheit. Diese sind gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz von Talk in Form von feinvermahlenen Typen mit einer mittleren größten Teilchengröße d₅₀ von <20 µm, bevorzugt <10 µm, besonders bevorzugt <5 µm, ganz besonders bevorzugt ≤2,5 µm.

Als bevorzugte anorganische Komponenten seien desweiteren genannt feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe und 4. bis 8. Nebengruppe, besonders bevorzugt aus der 3. bis 5. Hauptgruppe und 4. bis 8. Nebengruppe mit den Elementen Sauerstoff, Schwefel, Bor, Phosphor, Kohlenstoff, Stickstoff, Wasserstoff und/oder Silizium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und Hydride.

Besonders bevorzugte feinstteilige anorganische Verbindungen sind beispielsweise TiN, TiO₂, SnO₂, WC, ZnO, Al₂O₃, AIO(OH), ZrO₂, SiO₂, Eisenoxide, BaSO₄, Vanadiumoxide, Zinkborat, Silikate wie Al-Silikate, Mg-Silikate. Mischungen und/oder dotierte Verbindungen können ebenfalls verwendet werden. Die nanoskaligen Partikel können mit organischen Molekülen oberflächenmodifiziert sein.

Insbesondere bevorzugt is nanoskaliges AlO(OH).

Die durchschnittlichen Teilchendurchmesser der nanoskaligen anorganischen Materialien sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782 bis 796.

Die nanoskaligen anorganischen Verbindungen können als Pulver, Pasten, Sole, Dispersionen oder Suspensionen vorliegen. Durch Fällung können aus Dispersionen, Sole oder Suspensionen Pulver erhalten werden.

### Komponente G

Die erfindungsgemäßen Formmassen können weitere übliche Additive, wie z.B. Antitropfmittel, Gleit- und Entformungsmittel, Nukleiermittel, Antistatika, Stabilisatoren, Farbstoffe und Pigmente in einer wirksamen Konzentration enthalten.

Die erfindungsgemäßen Formmassen enthaltend die Komponenten A-G und gegebenenfalls weitere Zusätze, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammwidrigkeit, ihrer guten mechanischen Eigenschaften und Chemikalienbeständigkeit sowie aufgrund ihrer hohen Schmelzestabilität insbesondere zur Herstellung von Platten, Profilen und Formkörpern im Extrusions-, Extrusionsblas- und Tiefziehverfahren.

Beispiele für herstellbare Formkörper sind: Abdeckplatten, Fenster-/Türprofile sowie Elektroinstallationskanäle/-rohre, Kabelleiter und Verdrahtungskanäle, Stromschienenabdeckungen sowie Formteile, Extrusionsprofile oder Platten für den Kfz-/Schienenfahrzeug-/Flugzeug-Sektor (z.B. Innenverkleidungen) und den Bausektor.

Gegenstand der Erfindung sind ebenfalls Verfahren zur Herstellung der Formmassen, Verwendung der Formmassen zur Herstellung von Formkörpern, Platten und Profilen sowie die Formkörper, Platten und Profile selbst.

### Beispiele

### Komponente A

Verzweigtes Polycarbonat auf Basis Bisphenol A mit einer relativen Lösungsviskosität von 1,34 gemessen in Methylenchlorid bei 25°C und in einer Konzentration von 0,5 g/100 ml.

### Komponente B

Pfropfpolymerisat, hergestellt durch Emulsionspolymerisation, von 45 Gew.-Teilen Styrol und Acrylnitril im Verhältnis von 72:28 auf 55 Gew.-Teilen eines teilchenförmigen vernetzten Polybutadienkautschuks (mittlerer Teilchendurchmesser d₅₀ = 0,3 bis 0,4 µm).

### Komponente C.1

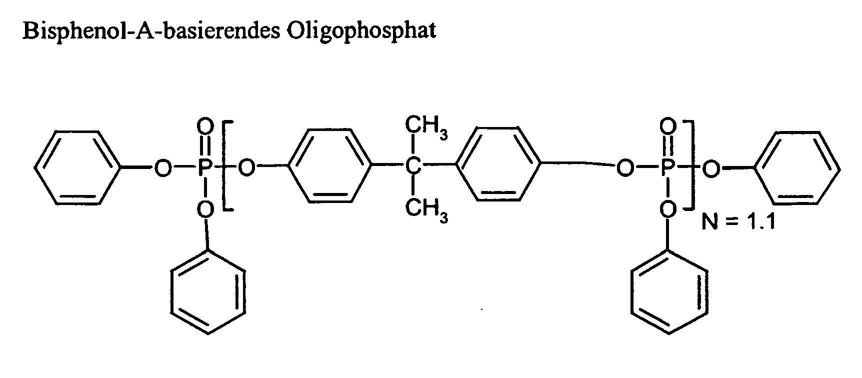

### Komponente C.2

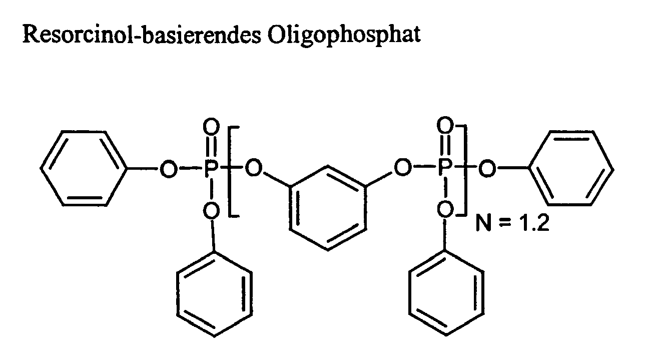

Zur Bestimmung der angegebenen zahlengemittelten N-Werte der Komponenten C.1 und C.2 wurden zuerst die Anteile der oligomeren Phosphate durch HPLC-Messungen bestimmt:

| | |
|---|---|
| Säulentyp: | LiChrosorp RP-8 |
| Elutionsmittel im Gradienten: | Acetonitril/Wasser 50:50 bis 100:0 |
| Konzentration: | 5 mg/ml |

Aus den Anteilen der einzelnen Komponenten (Mono- und Oligophosphate) wurden dann nach bekannten Verfahren die zahlengewichteten N-Mittelwerte berechnet.

### Komponente D

Das eingesetzte Polytetrafluorethylen-Präparat (D) wird hergestellt durch Cofällung einer Mischung wässriger Emulsionen des Pfropfpolymerisats (B) und eines Tetrafluorethylenpolymerisats. Das Gewichtsverhältnis Pfropfpolymerisat (B) zum Tetrafluorethylenpolymerisat im Koagulat ist 90 Gew.-% zu 10 Gew.-%. Die Tetrafluorethylenpolymerisat-Emulsion besitzt einen Feststoffgehalt von 60 Gew.-%, der mittlere PTFE-Teilchendurchmesser liegt zwischen 0,05 und 0,5µm. Die Pfropfpolymerisat-Emulsion besitzt einen Feststoffgehalt von 34 Gew.-% und einen mittleren Latexteilchendurchmesser von 0,3 bis 0,4 µm.

Zur Herstellung von (D) wird die Emulsion des Tetrafluorethylenpolymerisats (Teflon 30 N der Fa. DuPont) mit der Emulsion des Pfropfpolymerisats (B) vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente E

Pural 200: Nanoskaliges AlO(OH) mit Böhmitstruktur der Firma Condea Chemie GmbH (Hamburg, Deutschland).

### Komponente G

Pentaerythrittetrastearat

### Herstellung und Prüfung der erfindungsgemäßen Formmassen

Das Mischen der Komponenten A bis G erfolgte auf einem 3 Liter-Innenkneter. Die Formkörper wurden auf einer Spritzgießmaschine (Typ Arburg 270E) bei 260°C hergestellt.

Das Spannungsrissverhalten wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 0,2 bis 2,4 %) und bei Zimmertemperatur 5 Minuten im Testmedium gelagert. Die Beurteilung des Spannungsrissverhaltens erfolgt über die Randfaserdehnung, die mindestens erforderlich ist, damit der Stab innerhalb der 5-minütigen Expositionszeit im Testmedium bricht.

Die Kerbschlagzähigkeit (aₖ) wird bei Raumtemperatur gemäß ISO 180-1A bestimmt.

Die Vicat B 120-Temperatur wird gemäß ISO 306 mit einer Aufheizrate von 120 K/h und einer Stempellast von 50 N bestimmt.

Die Flammwidrigkeit wird im UL94 V-Brandtest beurteilt an Stäben mit einer Dicke von 1,5 mm.

Die Schmelzeviskosität im Niedrigscherbereich (Scherrate von 100 s⁻¹) wird bestimmt als Mass für die Schmelzestabilität bei der Extrusionsverarbeitung gemäß DIN 54811 bei 260°C.

Der MVR (Melt Volume Rate) wird bestimmt gemäß ISO 1133 bei 260°C unter Verwendung einer Stempellast von 5 kg.

**Tabelle 1**

| Zusammensetzung und Eigenschaften | | | | | | | | | | |
|---|---|---|---|---|---|---|---|---|---|---|
| **Beispiel/ Komponenten** | | **1** | **2** | **3** | **V1*** | **V2*** | **V3*** | **V4*** | **V5*** | **V7*** |
| | Polycarbonat | 85,0 | 84,0 | 84,0 | 86,2 | 86,2 | 85,3 | 86,0 | 84,3 | 86,4 |
| **B** | Pfropfpolymerisat | 4,0 | 4,0 | 4,0 | 1,7 | 1,7 | 2,8 | 2,8 | 3,8 | 3,0 |
| **C.1** | BDP | - | - | 8,0 | - | 9,5 | - | - | - | - |
| **C.2** | RDP | 7,0 | 8,0 | - | 9,5 | - | 9,5 | 9,5 | 9,5 | 9,5 |
| **D** | PTFE-Präparat (10 %) | 3,6 | 3,6 | 3,6 | 1,5 | 1,5 | 1,3 | 1,3 | 1,3 | - |
| **E** | nanoskaliges AIO(OH) | - | - | - | 0,7 | 0,7 | 0,7 | - | 0,7 | 0,7 |
| **G** | PETS | 0,4 | 0,4 | 0,4 | 0,4 | 0,4 | 0,4 | 0,4 | 0,4 | 0,4 |
| **Eigenschaften** ESC | Randfaserdehnung bei Bruch [%] | 1,8 | 1,8 | 2,2 | 1,2 | 1,2 | 1,0 | 1,0 | 1,0 | 1,2 |
| aₖ (23°C) | [kJ/m²] | 59 | 58 | 61 | 11 | 11 | 13 | 11 | 46 | 10 |
| Vicat B 120 | [°C] | 116 | 112 | 119 | 110 | 114 | 108 | 107 | 107 | 109 |
| MVR [260°C/5kg] | [ml/10min] | 7,7 | 8,2 | 6,8 | 10,5 | 10,3 | n.b. | n.b. | n.b. | 11,0 |
| Schmelzeviskosität [260°C, 100 s⁻¹] | [Pa s] | 1314 | 1123 | 1382 | 1028 | 1058 | 1185 | 800 | 1094 | 961 |
| UL94 V bei 1,5 mm (Nachbrennzeit) | Bewertung [s] | V-0 (36) | V-0 (27) | V-0 (38) | V-0 (33) | V-1 (54) | V-0 (30) | V-2 (78) | V-1 (72) | V-2 (59) |

| | | | | | | | | | | |
|---|---|---|---|---|---|---|---|---|---|---|
| * Vergleichsversuch | | | | | | | | | | |

Die Beispiele 1-3 in Tabelle 1 erfüllen in Gänze das geforderte Eigenschaftsprofil aus
a) exzellenter Flammwidrigkeit (UL 94 V-0-Bewertung bei 1,5 mm Wandstärke),
b) ausgezeichnetem Kerbschlagzähigkeitsniveau,
c) verbesserter Wärmeformbeständigkeit und insbesondere
d) deutlich verbessertem ESC-Verhalten.

Sie eignen sich aufgrund ihrer guten Schmelzestabilität (hohe Schmelzeviskosität, niedriger MVR) in idealer Weise für eine Verarbeitung im Extrusionsverfahren.

Tabelle 1 zeigt, dass erfindungsgemäße Produkte enhaltend Bisphenol-A-basierende Oligophosphate als Flammschutzmittel gegenüber vergleichbaren Produkten mit Resorcinol-basierenden Oligophosphaten im ESC-Verhalten, in der Kerbschlagzähigkeit, in der Wärmeformbeständigkeit sowie in der Schmelzerheologie deutliche Eigenschaftsvorteile aufweisen (vergleiche Beispiel 2 und 3).

Der Vergleich der Beispiele 1 bis 3 mit den Vergleichsbeispielen V1 bis V7 zeigt, dass sich der Zusatz von Teflon in Konzentrationen > 0,15 Gew.-% bezogen auf die Gesamtzusammensetzung positiv auf das Gesamteigenschaftsprofil auswirkt. So zeigt ein Vergleich von Beispiel 2 und 3 mit den Vergleichsbeispielen V1 bis V3, dass sich bei dem niedrigeren Teflongehalt der Vergleichsbeispiele nur durch Reduktion des Pfropfpolymerisatanteils, Erhöhung des Flammschutzmittelanteils und Zusatz eines anorganischen Materials als Flammschutzsynergist ein ausreichender Flammschutz einstellen läßt. Diese Massnahmen zur Verbesserung des Flammschutzes wirken sich aber negativ auf das ESC-Verhalten, die Kerbschlagzähigkeit, die Wärmeformbeständigkeit und die Schmelzerheologie aus. Erhöht man den Pfropfpolymerisatanteil entsprechend zur Realisierung eines zähen Bruchverhaltens (Vergleichsbeispiel V5), so läßt sich bei den niedrigeren Teflongehalten keine hinreichende Flammwidrigkeit realisieren. Ein Vergleich der Vergleichsbeispiele V3 und V4 zeigt, dass sich durch Zusatz anorganischer Materialien zwar die Schmelzerheologie und die Flammwidrigkeit verbessern läßt, nicht jedoch eine Anhebung der Kerbschlagzähigkeit und der Spannungsrissbeständigkeit auf das erforderliche Niveau realisieren läßt.

## Patentansprüche

1. Formmassen bestehend aus
75 bis 90 Gew.-% mindestens eines linearen oder verzweigten aromatischen Polycarbonats mit einer relativen Lösungsviskosität ≥ 1,30 (gemessen bei 25°C in Methylenchlorid und in einer Konzentration von 0,5 g/100ml),
2 bis 10 Gew.-% mindestens eines Pfropfpolymerisats hergestellt durch Emulsionspolymerisation,
3 bis 12 Gew.-% mindestens eines halogenfreien phosphorhaltigen Flammschutzmittels,
0,2 bis 0,5 Gew.-% eines fluorierten Polyolefins und
0 bis 1,5 Gew.-% eines partikel-, schuppen- oder faserförmigen anorganischen Materials,
und gegebenenfalls Additive ausgewählt aus der Gruppe der Antitropfmittel, Gleit- und Entformungsmittel, Nukleiermittel, Antistatika, Stabilisatoren sowie Farbstoffe und Pigmente,
wobei die Summe der Gew.-% der Komponenten 100 ergibt, und
wobei die speziellen erfindungsgemäßen Formmassen **gekennzeichnet sind durch** eine Eigenschaftskombination aus guter Flammwidrigkeit (V-0 Bewertung im UL 94 V-Brandtest bei Wandstärken ≤ 1,5 mm Wandstärke) und eine Schmelzeviskosität gemessen bei 260°C und einer Scherrate von 100 s-¹ von ≥ 600 Pa s.

2. Formmassen gemäß Anspruch 1 enthaltend als Flammschutzmittel eine halogenfreie phosphorhaltige Verbindung der allgemeinen Formel 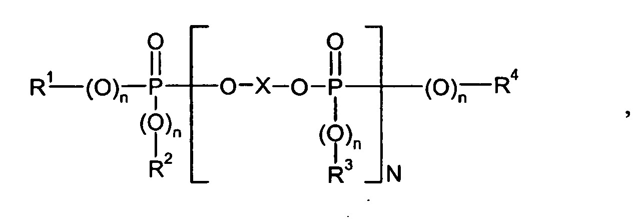 worin
R¹, R², R³ und R⁴ jeweils unabhängig voneinander C₁- bis C₈-Alkyl, jeweils gegebenenfalls durch Alkyl substituiertes C₅- bis C₆-Cycloalkyl, C₆- bis C₂₀-Aryl oder C₇- bis C₁₂-Aralkyl,
n unabhängig voneinander 0 oder 1,
N eine Zahl zwischen 0,1 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

3. Formmassen gemäß Anspruch 1 enthaltend als Flammschutzmittel eine halogenfreie phosphorhaltige Verbindung der allgemeinen Formel 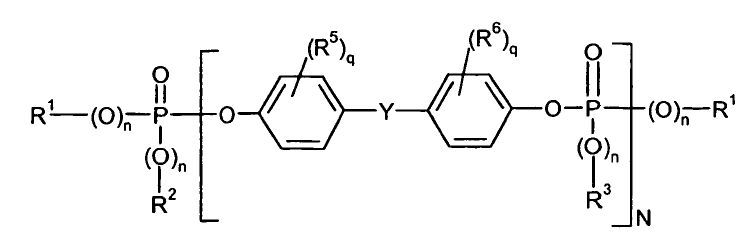 worin
R¹, R², R³ und R⁴ jeweils unabhängig voneinander C₁-C₈-Alkyl und/oder gegebenenfalls durch Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
N eine Zahl zwischen 0,1 und 30,
R⁵ und R⁶ unabhängig voneinander C₁-C₄-Alkyl und
Y C₁-C₇-Alkyliden, C₁-C₇-Alkylen, C₅-C₁₂-Cycloalkylen, C₅-C₁₂-Cycloalkyliden, -O-, -S-, -SO-, SO₂ oder -CO- bedeuten.

4. Formmassen gemäß Anspruch 1 enthaltend als Flammschutzmittel ein Bisphenol-A-basierendes Oligophosphat der Formel 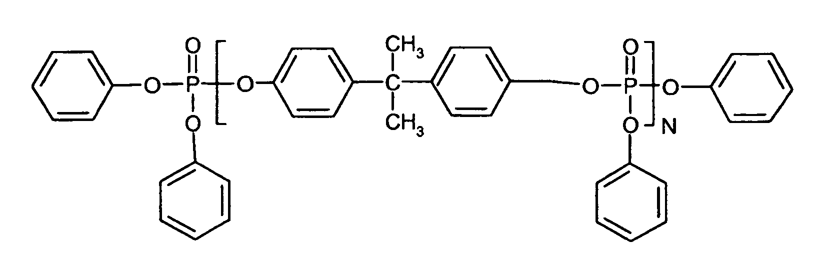 mit N zwischen 0,1 und 30.

5. Formmassen gemäß Anspruch 1 enthaltend als Flammschutzmittel ein Phosphazen oder Phosphonatamin.

6. Formmassen gemäß einer der Ansprüche 2 bis 4 enthaltend ein Flammschutzmittel mit einem gemittelten Oligomerisationsgrad N zwischen 0,5 und 10.

7. Formmassen gemäß einer der Ansprüche 2 bis 4 enthaltend ein Flammschutzmittel mit einem gemittelten Oligomerisationsgrad N zwischen 0,7 und 5.

8. Formmassen gemäß Anspruch 1 enthaltend 0,15 bis 1 Gew.-% bezogen auf die Gesamtzusammensetzung eines fluorierten Polyolefins, gegebenenfalls eingesetzt als Koagulat, Präcompound oder Masterbatch mit einem Pfropfpolymerisat oder einem Vinyl(co)polymerisat.

9. Formmassen gemäß Anspruch 1 enthaltend 0,2 bis 0,5 Gew.-% bezogen auf die Gesamtzusammensetzung eines fluorierten Polyolefins, gegebenenfalls eingesetzt als Koagulat, Präcompound oder Masterbatch mit einem Pfropfpolymerisat oder einem Vinyl(co)polymerisat.

10. Formmassen gemäß Anspruch 1 enthaltend als Schlagzähmodifikator ein oder mehrere Pfropfpolymerisate von 5 bis 95 Gew.-% wenigstens eines Vinylmonomeren auf 95 bis 5 Gew.-% mindestens einer Pfropfgrundlage mit einer Glastemperatur < 10°C.

11. Formmassen gemäß Anspruch 10 mit Pfropfpolymerisaten auf der Grundlage von Dien-, EP(D)M-, Acrylat- oder Silikonkautschuken.

12. Formmassen gemäß Anspruch 10 enthaltend ein Emulsions- ABS als Schlagzähmodifikator.

13. Formmassen gemäß Anspruch 1 enthaltend ein partikel-, schuppen- oder faserförmiges anorganisches Material.

14. Formmassen gemäß Anspruch 13 enthaltend als anorganisches Material ein feinteiliges Pulver mit einem mittleren Partikeldurchmesser ≤ 100 nm.

15. Formmassen gemäß Anspruch 13 enthaltend als anorganisches Material Talk oder ein anderes schuppenförmiges Silikat oder Aluminosilikat.

16. Formmassen gemäß Anspruch 1 enthaltend ein verzweigtes Polycarbonat.

17. Verfahren zur Herstellung der Formmassen gemäß einem oder mehreren der vorhergehenden Ansprüche, wobei die einzelnen Komponenten gemischt und bei erhöhter Temperatur compoundiert werden.

18. Verwendung der Formmassen gemäß einem oder mehreren der vorhergehenden Ansprüche zur Herstellung von Formteilen, Profilen, Platten, Rohren und Kanälen jeglicher Art.

19. Verwendung der Formmassen gemäß einem oder mehreren der vorhergehenden Ansprüche zur Herstellung von Formkörpern, Profilen, Platten, Rohren und Elektroinstallationskanäle im Extrusionsverfahren.

20. Formkörper bzw. Formteile sowie Profile, Platten, Rohre und Elektroinstallationskanäle erhältlich aus den Formmassen gemäß einem oder mehreren der vorhergehenden Ansprüche.

## Claims

1. Moulding compositions consisting of
from 75 to 90 wt.% of at least one linear or branched aromatic polycarbonate having a relative solution viscosity of ≥ 1.30 (measured at 25°C in methylene chloride and in a concentration of 0.5 g/100 ml),
from 2 to 10 wt.% of at least one graft polymer prepared by emulsion polymerisation,
from 3 to 12 wt.% of at least one halogen-free phosphorus-containing flameproofing agent,
from 0.2 to 0.5 wt.% of a fluorinated polyolefin and
from 0 to 1.5 wt.% of an inorganic material in particulate, flake or fibrous form,
and optionally additives selected from the group of the anti-dripping agents, lubricants and mould-release agents, nucleating agents, antistatics, stabilisers as well as colourings and pigments,
wherein the sum of the wt.% of the components is 100, and
wherein the specific moulding compositions according to the invention are **characterised by** a combination of good flame resistance (V-0 rating in the UL 94 V fire behaviour test at wall thicknesses ≤ 1.5 mm wall thickness) and a melt viscosity, measured at 260°C and a shear rate of 100 s⁻¹, of ≥ 600 Pa s.

2. Moulding compositions according to claim 1 containing as flameproofing agent a halogen-free phosphorus-containing compound of the general formula 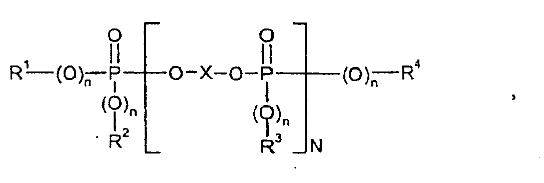 wherein
R¹, R², R³ and R⁴ are each independently of the others C₁- to C₈-alkyl, or C₅- to C₆-cycloalkyl, C₆- to C₂₀-aryl or C₇- to C₁₂-aralkyl each optionally substituted by alkyl,
the substituents n are each independently of the others 0 or 1,
N represents a number from 0.1 to 30, and
X represents a mono- or poly-nuclear aromatic radical having from 6 to 30 carbon atoms, or a linear or branched aliphatic radical having from 2 to 30 carbon atoms which may be OH-substituted and contain up to 8 ether bonds.

3. Moulding compositions according to claim 1 containing as flameproofing agent a halogen-free phosphorus-containing compound of the general formula 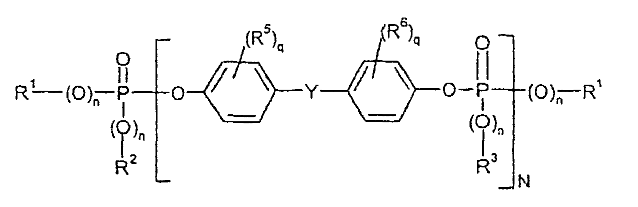 wherein
R¹, R², R³ and R⁴ are each independently of the others C₁-C₈-alkyl and/or optionally alkyl-substituted C₅-C₆-cycloalkyl, C₆-C₁₀-aryl or C₇-C₁₂-aralkyl,
the substituents n are each independently of the others 0 or 1,
the substituents q are each independently of the other 0, 1, 2, 3 or 4,
N represents a number from 0.1 to 30,
R⁵ and R⁶ are each independently of the other C₁-C₄-alkyl, and
Y represents C₁-C₇-alkylidene, C₁-C₇-alkylene, C₅-C₁₂-cycloalkylene, C₅-C₁₂-cycloalkylidene, -O-, -S-, -SO-, SO₂ or -CO-.

4. Moulding compositions according to claim 1 containing as flameproofing agent a bisphenol A-based oligophosphate of the formula 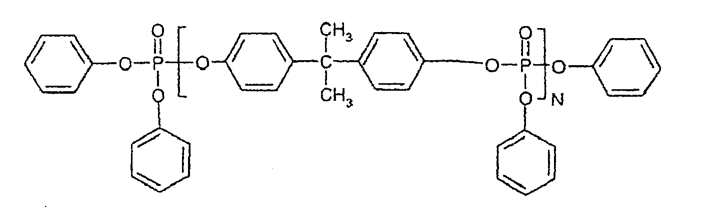 wherein N is from 0.1 to 30.

5. Moulding compositions according to claim 1 containing as flameproofing agent a phosphazene or phosphonate amine.

6. Moulding compositions according to any one of claims 2 to 4 containing a flameproofing agent having a mean degree of oligomerisation N of from 0.5 to 10.

7. Moulding compositions according to any one of claims 2 to 4 containing a flameproofing agent having a mean degree of oligomerisation N of from 0.7 to 5.

8. Moulding compositions according to claim 1 containing from 0.15 to 1 wt.%, based on the total composition, of a fluorinated polyolefin, optionally used in the form of a coagulate, a pre-compound or a masterbatch with a graft polymer or a vinyl (co)polymer.

9. Moulding compositions according to claim 1 containing from 0.2 to 0.5 wt.%, based on the total composition, of a fluorinated polyolefin, optionally used in the form of a coagulate, a pre-compound or a masterbatch with a graft polymer or a vinyl (co)polymer.

10. Moulding compositions according to claim 1 containing as impact modifier one or more graft polymers of from 5 to 95 wt.% of at least one vinyl monomer with from 95 to 5 wt.% of at least one graft base having a glass transition temperature < 10°C.

11. Moulding compositions according to claim 10 containing graft polymers based on diene, EP(D)M, acrylate or silicone rubbers.

12. Moulding compositions according to claim 10 containing an emulsion ABS as impact modifier.

13. Moulding compositions according to claim 1 containing an inorganic material in particulate, flake or fibrous form.

14. Moulding compositions according to claim 13 containing as inorganic material a finely divided powder having a mean particle diameter ≤ 100 nm.

15. Moulding compositions according to claim 13 containing as inorganic material talc or another silicate or aluminosilicate in flake form.

16. Moulding compositions according to claim 1 containing a branched polycarbonate.

17. Process for the preparation of the moulding compositions according to one or more of the preceding claims, wherein the individual components are mixed and compounded at elevated temperature.

18. Use of the moulding compositions according to one or more of the preceding claims in the production of mouldings, profiles, sheets, tubes and conduits of any kind.

19. Use of the moulding compositions according to one or more of the preceding claims in the production of moulded bodies, profiles, sheets, tubes and conduits for electrical installations by extrusion.

20. Moulded bodies or mouldings as well as profiles, sheets, tubes and conduits for electrical installations obtainable from the moulding compositions according to one or more of the preceding claims.

## Revendications

1. Matières de moulage constituées
de 75 à 90 % en poids d'au moins un polycarbonate aromatique linéaire ou ramifié avec une viscosité relative en solution ≥ 1,30 (mesurée à 25°C dans du chlorure de méthylène et dans une concentration de 0,5 g/100 ml),
de 2 à 10 % en poids d'au moins un polymère greffé préparé par polymérisation en émulsion,
de 3 à 12 % en poids d'au moins un agent ignifuge contenant du phosphore exempt d'halogène,
de 0,2 à 0,5 % en poids d'une polyoléfine fluorée et
de 0 à 1,5 % en poids d'une matière inorganique en forme de particule, de flocon ou de fibre,
et éventuellement d'additifs choisis parmi des agents anti-gouttes, des lubrifiants et des agents de démoulage, des agents de nucléation, des agents antistatiques, des stabilisateurs ainsi que des colorants et des pigments,
la somme des % en poids des constituants étant égale à 100, et
les matières de moulage particulières selon l'invention étant **caractérisées par** une combinaison de caractéristiques de bonne résistance à la propagation de flammes (évaluation V-0 dans le test de combustion-V UL 94 sur des épaisseurs de paroi ≤ 1,5 mm d'épaisseur de paroi) et par une viscosité à l'état de fusion mesurée à 260°C et à une vitesse de cisaillement de 100 s⁻¹ de ≥ 600 Pa s.

2. Matières de moulage selon la revendication 1 contenant comme agent ignifuge un composé contenant du phosphore exempt d'halogène de la formule générale 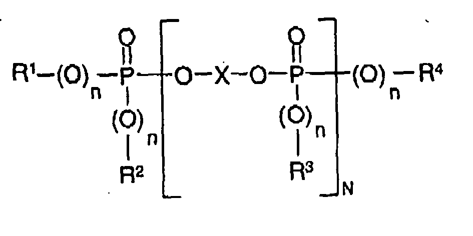 dans laquelle
R¹, R², R³ et R⁴ représentent chacun indépendamment un groupe alkyle en C₁-C₈, cycloalkyle en C₅-C₆, aryle en C₆-C₂₀ ou aralkyle en C₇-C₁₂ à chaque fois éventuellement substitué par un groupe alkyle,
n est indépendamment égal à 0 ou à 1,
N est un nombre compris entre 0,1 et 30 et
X représente un reste aromatique mono- ou polycyclique avec de 6 à 30 atomes de C ou un reste aliphatique linéaire ou ramifié avec de 2 à 30 atomes de C, lequel peut être OH-substitué et peut contenir jusqu'à 8 liaisons éther.

3. Matières de moulage selon la revendication 1 contenant comme agent ignifuge un composé contenant du phosphore exempt d'halogène de la formule générale 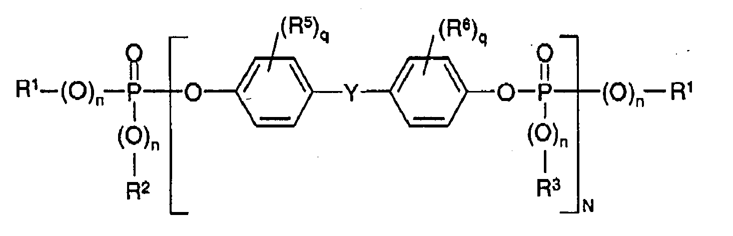 dans laquelle
R¹, R², R³ et R⁴ sont chacun indépendamment un groupe alkyle en C₁-C₈ et/ou un cycloalkyle en C₅-C₆, aryle en C₆-C₁₀ ou aralkyle en C₇-C₁₂ éventuellement substitué par un groupe alkyle,
n est indépendamment égal à 0 ou à 1,
q est indépendamment égal à 0, 1, 2, 3 ou 4,
N est un nombre compris entre 0,1 et 30,
R⁵ et R⁶ représentent indépendamment un groupe alkyle en C₁-C₄ et
Y représente un groupe alkylidène en C₁-C₇, alkylène en C₁-C₇, cycloalkylène en C₅-C₁₂, cycloalkylidène en C₅-C₁₂, -O-, -S-, -SO-, SO₂ ou -CO-.

4. Matières de moulage selon la revendication 1 contenant comme agent ignifuge un oligophosphate à base de bisphénol A de la formule 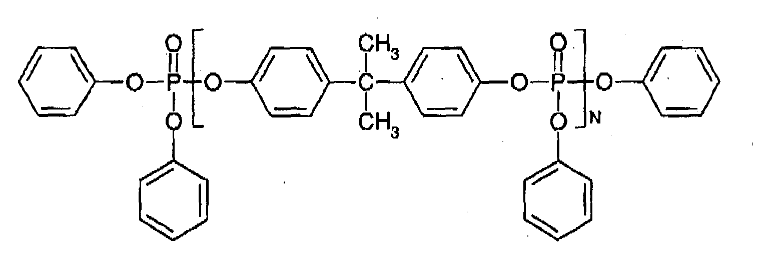 avec N compris entre 0,1 et 30.

5. Matières de moulage selon la revendication 1 contenant comme agent ignifuge un phosphazène ou une phosphonatamine.

6. Matières de moulage selon l'une quelconque des revendications 2 à 4 contenant un agent ignifuge avec un degré moyen d'oligomérisation N compris entre 0,5 et 10.

7. Matières de moulage selon l'une quelconque des revendications 2 à 4 contenant un agent ignifuge avec un degré moyen d'oligomérisation N compris entre 0,7 et 5.

8. Matières de moulage selon la revendication 1 contenant de 0,15 à 1 % en poids rapporté à la composition globale d'une polyoléfine fluorée, éventuellement utilisée comme coagulat, précomposé ou lot-mère avec un polymère greffé ou un co(polymère) vinylique.

9. Matières de moulage selon la revendication 1 contenant de 0,2 à 0,5 % en poids rapporté à la composition globale d'une polyoléfine fluorée, éventuellement utilisée comme coagulat, précomposé ou lot-mère avec un polymère greffé ou un co(polymère) vinylique.

10. Matières de moulage selon la revendication 1 contenant comme modificateur de la résistance élevée aux chocs un ou plusieurs polymères greffés de 5 à 95 % en poids d'au moins un monomère vinylique sur de 95 à 5 % en poids d'au moins une base de greffage avec une température de transition vitreuse < 10°C.

11. Matières de moulage selon la revendication 10 avec des polymères greffés sur la base de caoutchoucs de diène, d'EP(D)M, d'acrylate ou de silicone.

12. Matières de moulage selon la revendication 10 contenant une émulsion-ABS comme modificateur de la résistance élevée aux chocs.

13. Matières de moulage selon la revendication 1 contenant une matière inorganique en forme de particule, de flocon ou de fibre.

14. Matières de moulage selon la revendication 13 contenant comme matière inorganique une poudre finement divisée avec un diamètre moyen de particules ≤ 100 nm.

15. Matières de moulage selon la revendication 13 contenant comme matière inorganique de la stéatite ou un autre silicate ou aluminosilicate en forme de flocon.

16. Matières de moulage selon la revendication 1 contenant un polycarbonate ramifié.

17. Procédé pour la préparation des matières de moulage selon l'une ou plusieurs quelconques des revendications précédentes, dans lequel on mélange les constituants individuels et on les combine à température élevée.

18. Utilisation des matières de moulage selon l'une ou plusieurs des revendications précédentes pour la préparation de pièces moulées, de profils, de plaques, de tuyaux et de canaux de type quelconque.

19. Utilisation des matières de moulage selon l'une ou plusieurs des revendications précédentes pour la préparation de corps moulés, de profils, de plaques, de tuyaux et de canaux d'installations électriques dans un procédé d'extrusion.

20. Corps moulés respectivement pièces moulées ainsi que profils, plaques, tuyaux et canaux d'installations électriques obtenus à partir des matières de moulage selon l'une ou plusieurs des revendications précédentes.
